Europäisches Patentamt

European Patent Office

Office européen des brevets

(11) Publication number: **0 070 152**
A1

(12) **EUROPEAN PATENT APPLICATION**

(21) Application number: **82303586.0**

(22) Date of filing: **08.07.82**

(51) Int. Cl.³: **G 01 F 1/20**

(30) Priority: **10.07.81 GB 8121415**

(43) Date of publication of application:
**19.01.83 Bulletin 83/3**

(84) Designated Contracting States:
**DE FR GB IT SE**

(71) Applicant: **EATON S.A.M.**
**14 Boulevard du Bord de Mer Boite Postale 84**
**Monaco(MC)**

(72) Inventor: **Corbier, Jean Paul**
**10 Avenue Professeur Langevin**
**F-06240 Beausoleil(FR)**

(74) Representative: **Douglas, John Andrew**
**Eaton House Staines Road**
**Hounslow Middlesex TW4 5DX(GB)**

(54) Flowmeter with circulating body.

(57) A flowmeter has an eg. toroidal continuous chamber (9) around which circulations of a ball (10) are counted eg. by optical means (14). The majority of the stream to be measured passes through the instrument without traversing the chamber (9), through which only 20% of the total flow may pass. A constriction (3) in the main stream diverts the minor flow around a bypass path including the chamber (9). The constriction (3) may be an aperture formed in a wall or floor (4) of the chamber (9), which wall contains one half of the toroid as a groove.

Fig.1.

## Flowmeter With Circulating Body

The present invention relates to registering the passage of liquids, eg. the total volume passing past a point, or the quantity of liquid passing in a certain time.

The invention is particularly useful for flow measurements in clothes or dish washing machines, in other domestic appliances or for measuring fuel flows in electronic supervisory systems for cars, aircraft or the like.  For instance it is important that the filling up of a washing chamber should terminate after a designated quantity of water is present.  The quantity is often required to be known accurately, since too much water raises heating costs, or may create damage by overflowing boiling or detergent containing water. On the other hand under-filling the chamber may result in an inferior washing or tumbling action, or over-strong washing solutions etc.

Accurate liquid or rates of volume passage will be ideal, especially when digitally obtainable, for electrical comparisons with standard or reference volumes or flows, eg. for following a programme or generating automatic commands, controls, etc.

All these desirable features are realized in part or in full in embodiments of the present invention. One prior art sensor of the passage or quantity of liquid includes an electrically operated water-valve, eg. solenoid valve, which is energized or de-energized to close a tap after the detecting of a given hydrostatic pressure within an instrument. eg, via a quick-reacting electrical flip-flop.

Another known proposal involves an automatic flow control in the input liquid supply, and means to time the period that liquid is supplied.  This known proposal does compensate for varying eg. water pressures, but will only operate at one rate of flow.  Thus only a volume can be measured.

These prior liquid sensors are found to give uncertain volumes of liquid.  For instance, pressure responses typically are only accurate to $\pm$ 8 mm. For a typical washing chamber this uncertainty corresponds to $\pm$ 2.4 litres or so.  Controlling the time periods of steady flows is found to be of about the same inaccuracy or uncertainty even in good quality, well-installed apparatuses.  Levels incorrect by 3mm can give substantial overflow or underfilling problems.

Embodiments of the present invention can be used to dispense ten litres of liquid to within $\pm$ 0.6 litres, or to within $\pm$ 2 mm of a predetermined water level, in a typical dishwasher, at eg 7 litres/min flow rate.

The invention therefore can give eg. more accurate filling cycles, better washing by machine, less risk of overflows, easier interfacing with programming or microprocessing supervisory systems, also more economy and reliability than with pressure-responsive systems.

An embodiment is now described by way of example with reference to the drawings, in which;

Figures 1 and 5 show a diametrical section on different but similar water flow-meter devices each with a toroidal chamber containing a lightweight ball or sphere travelling round and round the chamber;

Figure 2 shows schematically a preferred mode of "plumbing-in" of the Figure 1 device;

Figure 3 are plots showing typical, almost linear relationships between minimum, median and maximum output frequencies and flow rates of the device of Figure 1;

Figure 4 is a graph of real volume against mains water pressure, when apparatus of the invention is set to deliver 10 litres of water.

Figure 6 and 7 show different details of the flowmeter of Figure 5;  and

0070152

Figures 8,9 and 10 show various pulse shaping circuits facilitating counting.

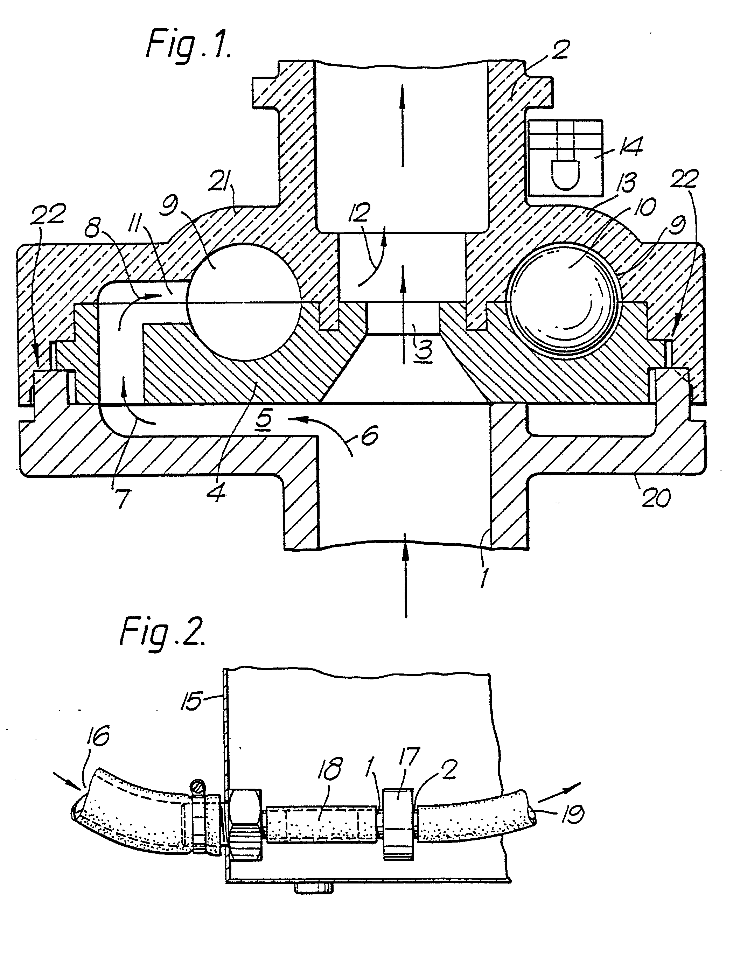

Referring to Figure 1 there is shown an inlet or upstream conduit 1 and an outlet or downstream conduit 2. Liquid travelling straight through passes via a constricted hole 3 in a diaphragm 4 which causes a pressure drop. Upstream of constriction 3 is the entry 5 to a bypass channel by which a proprotion of the liquid flow determined partly by the magnitude of the pressure drop is caused to follow the path indicated by arrow 6, 7 and 8 to enter a toroidal chamber 9 of which the plane is perpendicular to the drawing. The chamber contains a lightweight sphere 10, eg. of polypropylene which can roll around the chamber very freely.

The liquid passing in the bypass channel is injected tangentially into the toroidal chamber by a nozzle 11 forming the end section of the bypass channel. The nozzle section may be equal to or smaller than that of the rest of the bypass channel, and causes the liquid to enter the chamber in such manner as to flow around the chamber and propel the sphere 10 before it.g The propelling jet of liquid will already be travelling along the chamber when it enters, due to the tangential direction of the nozzle action 11 to the toroid. The tangential inclination thereof is not visible in the Figure 1 sectional view.

The liquid passes around toroidal chamber 9, propelling the ball 10 therearound, and then passes out of the chamber by an orifice not visible in Figure 1, to follow the direction of the arrow 12 and thus to rejoin the main stream of the flow just after this has traversed diaphragm 4 via constriction 3.

In this embodiment the diaphragm 4 provides the bottom half of the toroidal chamber as well also as defining the radial extremity of the bypass channel, but this is a refinement, and the constriction 3 may be provided by means unique to this function if preferred.

It must be appreciated that the sum of the flow through the constriction ie. the main flow, and the flow through the toroid ie. the total flow, will be represented by the toroid flow itself. In fact the total flow is nearly linearly related to the toroid flow volume alone. The latter volume will in turn be registered by the total travel of the ball 10 around the toroid. This total travel is conveniently registered digitally by counting the number of revolutions of the toroid 9 performed by sphere 10. In this embodiment the upper part (as illustrated) of the flow-meter, designed 13, may be transparent, and the revolutions viewed by an electrical transducer 14 eg. comprising a light emitting diode and a photo-detector which will record a reflected light impulse every time the ball passes subjacent the transducer 14. Alternatively interruptions of a transmitted light beam may be counted. In practice the count is related linearly to the volume of liquid passed.

Instead of recording flow volume in total, flow rates may be more interesting (eg. when measuring instantaneous consumptions of fuel oil, petrol, etc.), in which case the rate of count may be recorded. The invention may thus be applied to reading volumes or flow rates or both. Instead of counting revolutions, it may be preferred to record the velocity of the sphere around the toroid. The relationships or proportions need not be linear, so that the law of dependence on calibrations of flow against revolution count etc., may sometimes need to be established before any specific use.

An effective application of the flow meter of Figure 1 is shown in Figure 2 in which a wall 15 of a washing machine has a solenoid water valve 16 connected to the mains water entering from the left.    Valve 16 is energised automatically so that a washing  chamber or material dispenser is filled, and filling is stopped at precise moments.    For instance, the chamber may require to be filled with 10.1 litres of water while the water supply varies widely in pressure.    Since the supply varies, the rate of water passage will vary correspondingly but the volume discharged will require to be accurately close to the 10.1 litres when valve 16 shuts off.

The flowmeter of Figure 1 is shown at 17 downstream of the valve, the entry pipe 1 being connected thereto by a union 18.   The outlet pipe 2 of flowmeter 17 is connected by flexible piping eventually to the dish or clothes washing chamber.   The electrical output of transducer 14 (not shown in Figure 2) is a pulse train, and pulses representing revolutions of the travelling sphere 10 are counted, and then at a predetermined count corresponding to 10.1 litres, a "close" command is sent to valve 16.

The entire flowmeter 17, i.e. as shown in Figure 1 may be a polycarbonate transparent plastics material and is constructed by assembling the inlet tube 1, including the base 20 of the flowmeter body as viewed, together with the disc piece 4 and the ball 10, into the top section 21 of the flowmeter, with which the outlet tube 2 and the transparent window part 13 may be integral.

The diaphragm providing the constriction 3 is integral with the disc piece, as shown by body 4, but this is a detail of convenience.   This disc piece provides the bypass channel inner wall, and the bottom boundary of the toroidal chamber.

After this assembly, top part 21 and bottom part 20 are joined peripherally at 22, by ultrasonic welding or soldering to provide watertightness of the toroid both outwardly, and inwardly towards the central channel.   The combined diaphragm and dispiece may be shaped as illustrated to minimize water leaks by providing tortuous leak paths.

The transducer 14 may as aforesaid have a side by-side source and detector of light.   Reflection-denoting pulses may appear at the emitter of a photo-transistor, be amplified and shaped, and be counted to initiate commands by a microprocessor or programmer. The flowmeter thus gives _digital_ command signals.

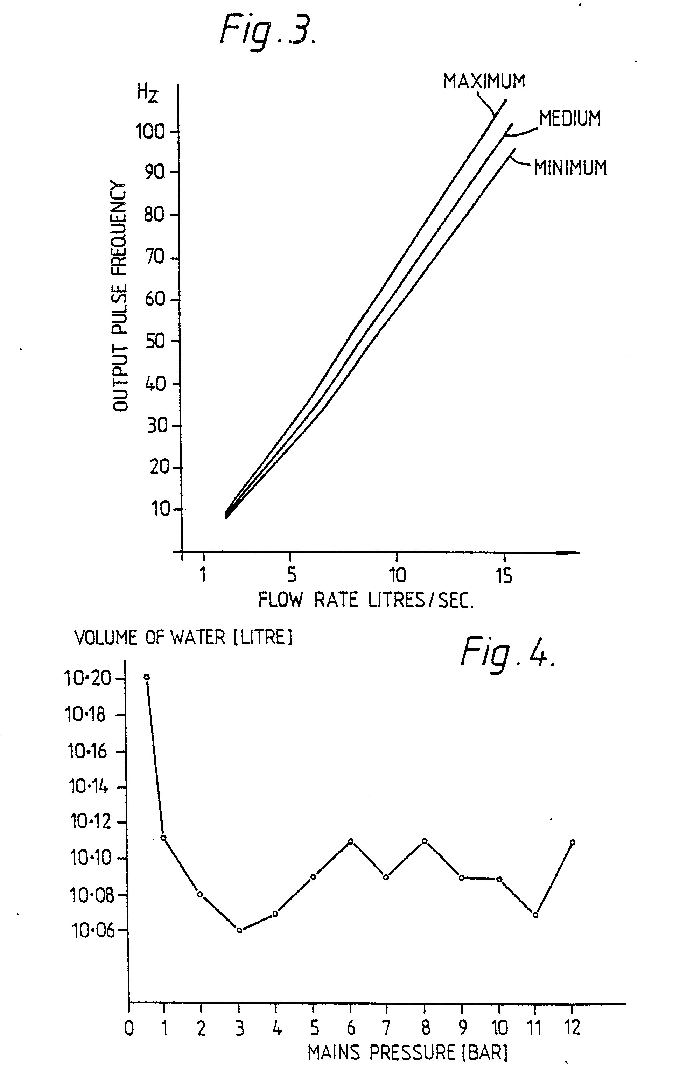

Referring to Figure 3, a flowmeter as in Figure 1 is found to give an almost perfect linear relationship between pulse output frequency (between 0 and 100 Hz) and flow rate between 0 and 15 litres per minute);   however although linearity is preferable, in some cases responses will not be linear.

The three linear plots show minimum, medium and maximum frequencies obtained from measurements at a series of known water flow rates.  For the measurements, the water temperature varied between 8.4 and $10.3^{O}C$.   It can be seen that the uncertainty in frequency indications;   for any given flow rate between about 2.0 and 15.5 litres per minute, i.e. for frequencies between about 8 Hz and 100 Hz;   is about $\pm$ 7.5%.

Referring now to Figure 4, when total volume of flow is in question, as for the washing machine described in relation to Figure 2, the counting of total revolutions to give a nominal 10.10 litres to charge the chamber 1, led to values from 10.06 litres 10.20 litres of actual delivery as mains pressure varied from 0.5 to 12.0 Bars (a factor of 24 or so). Since the mains pressure varies, the charging rate will also vary, but the flowmeter 7, and Figure 1, gives less than 1% error in delivery of the 10.10 litres.

This total volume or volume passage rate is equally reliably registered by the flowmeter of the invention;  this comprising a rolling device in a toroidal locus, and means to register the revolution rate and/or total count.   The construction may be by assembling, and joining by soldering/welding, pieces such as items 1, 2 and 4 or variations thereof.

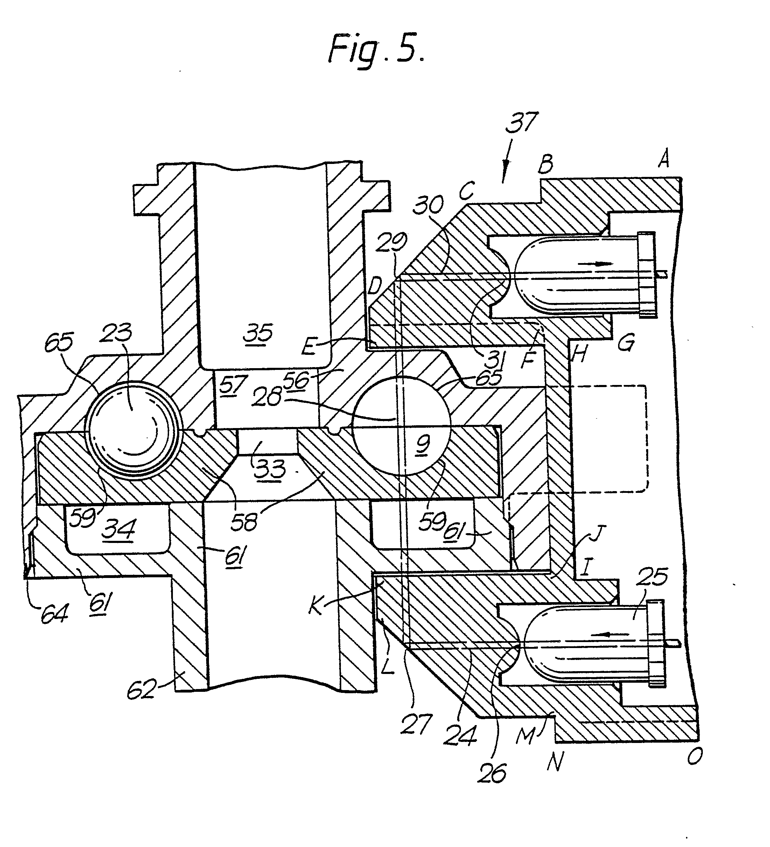

Referring now to the flowmeter of Figure 5, this differs from that of Figure 1 essentially in that the optical detection of each passage of a sphere 23 is detected by a light, infra-red or other optical beam arranged to pass through the structural walls of the flowmeter.

A beam 24 is formed at 25, eg. from an L.E.D. source and having entered the structure at 26 is reflected at 27 to pass preferably centrally across the toroid as seen by the dashed double lines at 28.   Unless the ball 23, which is absorbent or reflective of the beam energy, intercepts the beam at 28, the light or other radiation passes through to another internal reflection at 29 in the structure to form beam 30.

Beam 30 leaves the structure at 31 and then passes over path 32 to a photo-detector and pulse shaper and counter (not illustrated).   Every time the ball intercepts the light beam ie. once during each revolution of the ball 23, a pulse is generated by the photodetector, designating a brief absence of light impinging on it.

Otherwise the flow paths of the fluid may be as for Figure 1, a pressure being created by flow through central aperture 33 in an upward direction, which drives a small proportion of the fluid into a bypass channel 34, thence into the toroid and eventually out at exist conduit 35.   In this embodiment it is more important that the liquid be fairly transparent to the optical beam at 28, so that the passing ball forms a good contrast.

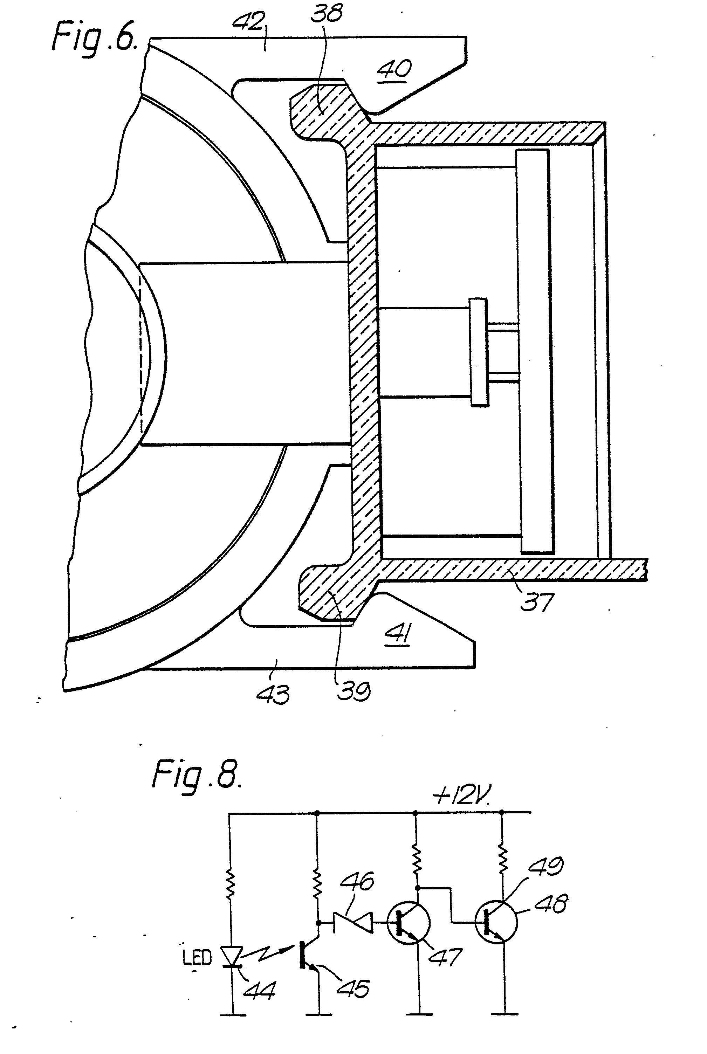

Referring again to Figure 5, the optical unit may be a separate item extending along apices lettered A to O.   Now referring to Figure 6, obtained by viewing the unit of Figure 5 from underneath (see the arrow of Figure 5), the optical unit is referenced 37 and hooked extensions 38 and 39 thereof engage abutments 40 and 41 attached on the flowmeter body by somewhat elastic arms 42, 43. Engagement by unit 37 causes the arms to be forced apart, and then abutments 40 and 41 snap inwards and secure the optical unit 37.

The unit is detached, whenever it needs servicing or the light passage surfaces need cleaning, by forcing the arms 43 and 42 apart slightly before moving the unit 37 rightwards as illustrated.

Figure 5 shows also our presently preferred assembly forming the flowmeter comprising a top section 56 integral with an outlet tubular portion 2 forming the exit conduit 35, of which a portion 57 adjacent the toroidal chamber has a smaller diameter.   This portion contacts a diaphragm 58, which provides the small-apertured central constriction 33 and also provides the lower semi-toroidal wall 59 of the chamber in which ball 23 circulates.   The top section 56 alone can be seen in plan  view, looking "upwards" (considering the Figure 5 elevation) from the inside of the flowmeter.

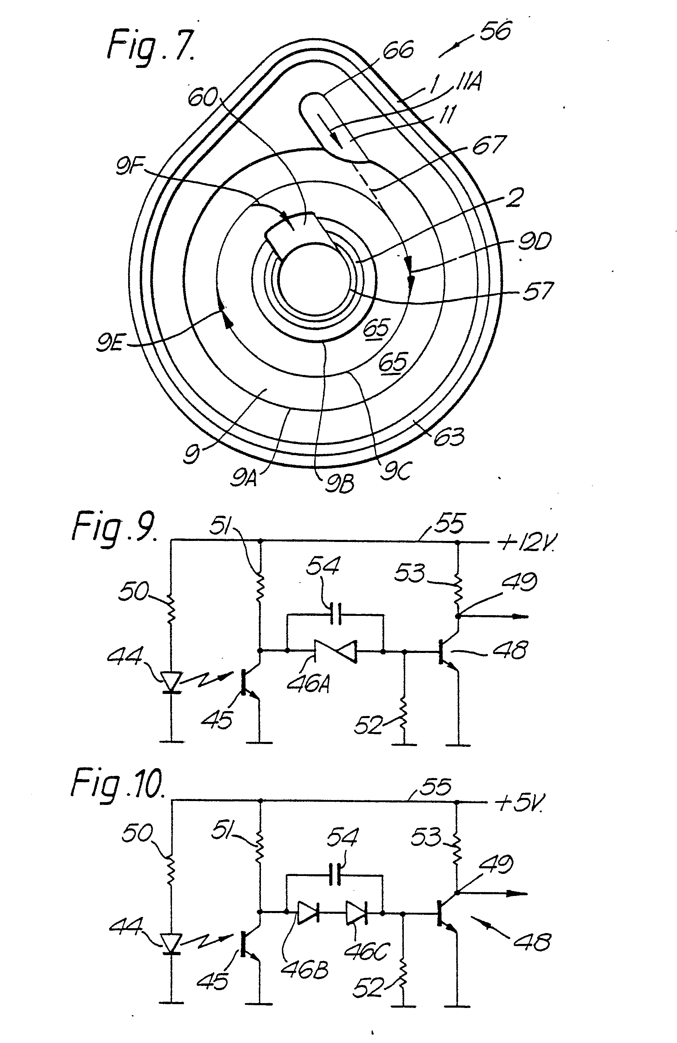

The smaller diameter portion 57 receives the outlet orifice(again not shown in Figure 5, but shown at 60 in Figure 7), so that the minority (eg. 20%) stream from the toroidal chamber rejoins the majority stream at 57.

The base or lower part 61 of the flowmeter body, integral with the inlet or upstream conduit 62, may either abut the diaphragm 58 as suggested in Figure 5, or may abut an internal annular platform 63 formed in the hollowed out part of upper portion 56, as shown in Figure 7.   The outermost annular part 64 of the upper portion 56 then provides a surrounding skirt and can be seen in Figure 5 or Figure 7. The three major parts 56, 58 and 61 are again welded together after being assembled in appropriate abutting relationship.

Whatever the details of the assembly may be, the incoming bypass stream is collected in the bypass channel 34 between the base and the diaphragm, then it enters a vertical channel in the diaphragm 58 which channel is not visible in the drawings, and then passes through a nozzle 11, not shown in Figure 5 but visible in Figure 7, to follow the route marked by arrow 9C into the toroidal chamber 9. The upper body portion 56 provides the upper semi-toroidal wall 65 of the chamber 9.

The nozzle 11, like the chamber 9, is formed half in the diaphragm and half by a semi-cylindrical channel shown at 66 in the upper body portion 56 of the instrument. The half of the nozzle in the diaphragm will have its outer extremity communicating with the vertical channel in the diaphragm by which bypass fluid access from space 34 (Figure 5) is enabled.

Referring to Figure 7, the inner extremity of chamber 9 is shown by circle 9A, the outer extremity by 9B, and the generally central flow line in chamber 9 is shown by circle 9C. The central flow line of the bypass fluid is via arrow 11A in nozzle 11, along the dashed line 67 which is tangential to central flow circle 9C and axial with respect to nozzle 11. The fluid is traced thereafter by arrows 9D and 9E on circle 9C. Each element of the fluid will make several revolutions, generally round the line of circle 9C before following the arrow 9F in preference to arrow 9D and exiting the chamber 9 via the outlet orifice 60.

Presently preferred arrangements for orifice 60 comprise a semi-cylindrical groove formed only in upper portion 56, Figure 7 on a short line generally parallel to the entering line of flow, ie. along the axis of inlet nozzle 11 and tangent line 67. There is no mating groove in the diaphragm, so that the fluid exiting the chamber is directed away from the diaphragm constriction 33, and towards the exit conduit 57 and 35, and outlet tube 2.

The semi-cylindrical nature of the outlet orifice and its paralleling the nozzle axis are not essential features of the invention. Another feature which is optional but presently much preferred, is that the nozzle and the outlet orifice are not opposite, or $180^{o}$ spaced around the toroid. Indeed we prefer that they be about $35^{o}$ in circumferential spacing as shown, or even less. This is because the entry and exit of fluid with respect to the toroidal chamber cause turbulence, and it is preferred teaching that the two turbulences be as close together as practicable.

Prior art toroidal flowmeters with a circulating body eg. sphere, tended to have the entry and exit $180^{o}$ apart, and indeed the turbulences in these prior art devices were less troublesome or even relevant, because multiple circulations of the chamber by each fluid element were absent. Accordingly, designs of the present teaching will feature closely spaced entry and exit points, and multiple circuits of the fluid in the chamber. Furthermore the dimensioning of the various flow passages is such that the fluid in the chamber is a minority, eg. 20%, of the total flow. The flow passages may have specific shapings or obstacles etc. to assist in these various goals.

Referring now to Figure 8 the circuit diagram schematically shows the light emitting diode source at 44 radiating towards a photodetector, eg. phototransistor 45, the collector of which develops positive pulses every time the sphere passes through the radiation path. The pulses are made sharper,

eg. to have more vertical rises and falls, by passing the positive pulses through a zone 46 which is effective to remove all but sharp peaks of the original pulses, and these peaks are fed to the base of common emitter NPN transistor 47.   The amplified pulses therefrom are again voltage amplified by a common emitter transistor 48, which is over-driven sufficiently by the amplifying stages for short square topped pulses to be developed on the collector 49, which is the circuit output, of low duty cycle.   These shaped pulses are much more easily counted than the original pulses would have been if amplified linearly with their original shapes and duty cycles.   The counting is then routine.

Figure 9 shows an improved circuit since a transistor stage such as 47 in Figure 7 is saved. A 5.6 volt zener 46A is now shunted by a capacitor and a high value resistor 52 shunts the zener output to ground.   The phototransistor 45 and the one amplifier transistor 48 are common emitter connected as before. A 12 volt rail 55 is provided as before.

Sometimes operation at smaller volts, eg. 5V is a requirement,   Referring to Figure 10, the 5 volt rail shown at 55 causes changes in preferred resistor values and a replacement of zener 46A by two silicon diodes, or diode-connected transistors 46B, 46C. Such diodes drop about 1.4V each for quite a wide range of currents.   Referring in each case to Figures 8 and 9 respectively resistor 50 may be valued at 220 and 82 ohms, resistor 51 at 180 and 68 kil-ohms(K), resistor 52 at 470K and 270K, resistor 53 at 8.2K and 3.3K; shunt capacitor 54 may be 4.7 microfarad in each Figure.   The preferred photo-transistor 45 is a Siemens type BP 103 B and transistor 48 may be type BC 548.   The L.E.D. 44 may be type LD 271 of Siemens AG.   Many alternative circuits will give equal performance.

It should be noted that the ball flowmeters of Figures 1 and 5 are so designed that the toroid entry and exit points for the fluid are relatively close together compared with a revolution, eg. as close together as practical may be $35^{\circ}$ or so apart, measured round the toroid, as can be seen particularly in Figure 7. We recommend not substantially increasing this angular spacing eg. beyond $75^{\circ}$ because the entry and exit each slow down the water flow rather than unpredictably, perhaps by locally breaking up streamline flow. The two perturbations should therefore occur close together on the toroidal course (rather than $180^{\circ}$ apart as prior ball flowmeters have featured). The majority of the toroidal fluid path has then something approximating to a streamline flow and the optical detector is best in the middle of the streamline flow section formed.

Also for conserving streamline flow, any viewing or light transmitting window should be so designed as to cause minimal perturbations in the flow. The preference is for the upper part 13 to be transparent as aforesaid.

Very strongly preferred at the present time is that the nozzle 11 should enter tangentially to the toroidal channel.

Also preferred is that the short fluid exit passageway from the toroid through the plastics material of the body towards the axis where the fluid flows combine, should be parallel to the nozzle 11 and displaced around the toroid by $35^{\circ}$ or less from the nozzle.

The ball is best having a density approximating to that of the fluid. Thus polypropylene is a preferred insert material having 0.95 specific gravity, when water or aqueous detergent solution is the working fluid.

We recommend the fluid inlet to be roughly tangential to the toroid, although its exit may be tangential or non-tangential eg. axial, or as the inlet if reversible measurements were required, with flow in both directions.  The flow meters of the invention are expected to be designed for flow in one direction, at flow rates certainly up to 17 litres per minute and probably higher.

A very important feature of our devices is the pressure dropping main flow path, creating the bypass path for fluid entering the toroidal chamber. Thus only 20% may enter the toroid, certainly less than 50%.

It should also be noted that the dimensions of the chamber, and of its entrance jet and exit, are proportioned so that a majority of the fluid flowing in the toroid does not leave via the exit while in its vicinity.  Therefore any element of the fludi will make several eg. 20 revolutions of the toroid before leaving it.  The ball therefore accompanies a far greater flow of fluid than actually passes through the exit and entry of the toroid, if one were to consider the accompanying fluid to be the area of the toroid (or ball) multiplied by the distance the ball travels.  Therefore the sensitivity of the ball response is high, without requirement for all the flow to enter the toroid. The toroid is preferably made fluid-tight by ultrasonically welding together two plastic parts having matching half-toroidal grooves.

Prior art proposals such as US Patent 4157660 do not consider dimensioning the toroid to contain the fluid thus for several revolutions, rather nearly all the entering fluid leaves after one revolution.  Also, there is no bypass, and the total flow passes through the toroid.  We firmly recommend the pressure-dropper and bypass system, in order to initiate flow through the toroid. In fact US Patent 4157660 and other proposals measure fuel flow in a car, and even a large car travelling at 150 km per hour only consumes about 22.5 litres per hour. Thus the 17 litres/minute we cater for is several times greater and flow requirements and problems become correspondingly more stringent. We find our flow very linear with the revolution count over quite a wide range of flows. The outlet of our toroid is not connected to the outer side of the toroid, and we do not use a viewing window of the fluid flow-perturbing design of US Patent 4157660 because of the faster flows which we have to measure.

1. A flowmeter comprising a housing having an upstream conduit (1); a downstream conduit (2); an internal chamber (9) defining a continuous channel along which fluid, which can enter via an entry port (11) communicating with the upstream conduit (1), can pass along a loop before exit via an exit orifice port communicating with the downstream conduit (2) of the flowmeter; a body (10) located in the chamber which during operation is propelled by the fluid having entered via said entry port to execute multiple transits of the continuous channel of the internal chamber; which body (10) transits are registered (figures 7, 8 or 9) as the required indication of flow, characterized in that said entry port (11), said continuous channel and said exit port participate in a bypass channel by which some fluid is diverted from a main flow which enters tbe upstream conduit (1) and is caused to rejoin the main flow for exit at the downstream conduit.

2. A flowmeter according to Claim 1, characterized in that the fluid channelling is arranged so that the diverted fluid is about 20% of the main flow.

3. A flowmeter according to Claim 1 or 2 characterized in that the diverted fluid itself describes a plurality of transits of the continuous channel before leaving the internal chamber (9).

4. A flowmeter according to Claim 1, 2 or 3 characterized in that the chamber has a toroidal form, and the entry port (11) comprises a nozzle by which fluid enters tangentially to the toroid.

5. A flowmeter according to Claim 4 characterized in that the exit port comprises a connection towards the rejoining with the main fluid stream which

0070152

connection leaves the toroid in a direction parallel
to the tangential entry.

6.   A flowmeter according to Claim 5 characterized
in that the exit port connection is inward of
the toroid.

7.   A flowmeter according to Claim 6 characterized
in that the exit port is relatively close to the
inlet port aroud the toroid, eg. $35^{\circ}$ or so therefrom.

8.   A flowmeter according to Claims 5,6 or 7
characterized in that the exit port is dimensioned
so that a majority of the fluid flowing within the
toroid does not exit via the exit port.

9.   A flowmeter according to Claim 8 characterized
in that the fluid makes 20 revolutions around the
toroid before exiting.

10.   A flowmeter according to any of Claims 1 - 9
characterized in that the body is of transparent material eg.
polycarbonate, the moving body is non-transparent,
and transits of the body past a point on the closed
channel are detected optically.

11.   A flowmeter according to any of Claims 1 - 10
characterized in that the main flow path comprises a
constriction (3 or 33) by which a pressure difference
is created to divert fluid towards the chamber (9),
eg. about 20% of the total flow (main flow + diverted
or bypass flow).

12.   A flowmeter according to Claim 11 characterized
in that a main wall of the chamber is provided by a
diaphragm (4) at the centre of which is formed said
constriction (3).

**Fig.1.**

**Fig.2.**

2/5

0070152

Fig. 3.

Fig. 4.

**Fig.5.**

0070152

Fig.6.

42  38  4/5  40

37  41

43  39

Fig.8.

+12V.

LED  44  45  46  47  48  49

Fig.7.

Fig.9. +12V.

Fig.10. +5V.

## DOCUMENTS CONSIDERED TO BE RELEVANT

| Category | Citation of document with indication, where appropriate, of relevant passages | Relevant to claim |
|---|---|---|
| Y,D | US - A - 4 157 660 (SPACEK) <br> * Fig. 1,2; column 3, line 8 - column 4, line 53 * | 1,4,10 |
| Y <br> A | DE - A - 1 916 647 (JONSSON) <br> * Fig. 1,2,5,6,9,10; page 1, line 16 - page 2, line 20; page 4, line 13 - page 6, line 2; page 7, line 17 - page 8, line 18; page 9, line 20 - page 10, line 21 * | 1,4,10 <br> 3 |
| A | DE - B2 - 2 734 477 (SOURĬAU) <br> * Fig. 1-3; column 2, lines 4-65; column 3, lines 11-53 * | 7 |
| A | DD - A - 63 183 (LIPPOLD) <br> * Fig. 1,2; column 4, lines 6-28 * | 7 |
| A | GB - A - 1 209 547 (JONSSON) | |

---

**CLASSIFICATION OF THE APPLICATION (Int. Cl. ³)**

G 01 F 1/20

**TECHNICAL FIELDS SEARCHED (Int.Cl. ³)**

G 01 F 1/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | | |
|---|---|---|---|
| **Place of search** <br> VIENNA | **Date of completion of the search** <br> 30-09-1982 | **Examiner** <br> GRONAU | |

EPO Form 1503.1 06.78